# DEMANDE DE BREVET EUROPEEN

(11) **EP 4 474 187 A1**
(43) Date de publication de la demande: **11.12.2024**
(21) Numéro de dépôt: 24179413.0
(22) Date de dépôt: 31.05.2024
(51) Int. Cl.: B60K 1/04

(54) **DISPOSITIF DE STOCKAGE D'ÉNERGIE**

(30) Priorité: 06.06.2023 FR 2305683
(71) Demandeur: Ampere SAS, 92100 Boulogne-Billancourt (FR)
(72) Inventeur: CARIER, Jerome, 78640 VILLIERS SAINT FREDERIC (FR); LEGER, Guillaume, 78640 VILLIERS SAINT FREDERIC (FR); LEMAILLET, Philippe, 78640 GUYANCOURT (FR); OLLIVIER, Mathieu, 78280 GUYANCOURT (FR)
(74) Mandataire: Renault Group

(57) **Abrégé**

Dispositif de stockage d'énergie (6) pour un véhicule (1), notamment pour un véhicule automobile, le dispositif de stockage d'énergie comprenant une batterie (4) électrochimique et au moins un moyen de liaison (10) destiné à relier deux organes (8, 9) du véhicule distincts du dispositif de stockage d'énergie, l'au moins un moyen de liaison traversant le dispositif de stockage d'énergie de part en part.

## Description

### Domaine Technique de l'invention

L'invention concerne un dispositif de stockage d'énergie comprenant une batterie électrochimique. L'invention concerne aussi un véhicule, notamment un véhicule automobile, comprenant un tel dispositif de stockage d'énergie. L'invention porte aussi sur un procédé d'assemblage d'un tel véhicule.

### Etat de la technique antérieure

Certains véhicules, notamment les véhicules automobiles électriques ou hybrides, comprennent une batterie électrochimique destinée à alimenter en énergie électrique un moteur électrique entraînant des roues motrices du véhicule. La batterie s'étend généralement au niveau d'un plancher du véhicule, sensiblement entre un essieu avant et un essieu arrière du véhicule.

Afin de conférer une autonomie maximale au véhicule automobile, la batterie contient un grand nombre de modules électrochimiques. La batterie est donc relativement volumineuse. Elle occupe ainsi une grande partie du volume disponible entre l'essieu avant et l'essieu arrière du véhicule.

Par ailleurs, un véhicule automobile embarque différents systèmes comprenant chacun plusieurs organes reliés entre eux. Par exemple un véhicule automobile comprend un système de freinage comprenant des organes de friction pour chacune des roues du véhicule et au moins un organe de commande relié à une pédale de frein. Des conduites hydrauliques remplies de liquide de freinage relient les organes de friction à l'organe de commande. Les différents systèmes d'un véhicule automobile requièrent ainsi des moyens de liaison entre les organes qui les composent. En raison du volume important occupé par la batterie, le volume disponible pour les différents moyens de liaison est fortement limité. Certains moyens de liaison s'étendent au-dessus de la batterie, entre une face supérieure de la batterie et un plancher d'habitacle.

Un tel agencement n'est toutefois pas optimal car il réduit le volume disponible pour les passagers du véhicule et expose les moyens de liaison à des risques de choc ou d'endommagement liés à l'utilisation de l'habitacle, par exemple lorsque des objets lourds ou contendants sont chargés dans le véhicule.

### Présentation de l'invention

Le but de l'invention est de fournir un agencement comprenant un dispositif de stockage d'énergie remédiant aux inconvénients ci-dessus et améliorant les agencements de dispositifs de stockage d'énergie connus de l'art antérieur.

Plus précisément, un premier objet de l'invention est un agencement d'un dispositif de stockage d'énergie à la fois simple à fabriquer, léger, compact, et offrant une protection supplémentaire aux moyens de liaison d'un véhicule automobile.

### Résumé de l'invention

L'invention se rapporte à un dispositif de stockage d'énergie pour un véhicule, notamment pour un véhicule automobile, le dispositif de stockage d'énergie comprenant une batterie électrochimique et au moins un moyen de liaison destiné à relier deux organes du véhicule distincts du dispositif de stockage d'énergie, l'au moins un moyen de liaison traversant le dispositif de stockage d'énergie de part en part.

Selon un mode de réalisation, l'au moins un moyen de liaison comprend :
- au moins un moyen de liaison hydraulique, notamment au moins une conduite hydraulique d'un système de freinage du véhicule, et/ou
- au moins un moyen de liaison électrique, notamment au moins un câble électrique, et/ou
- au moins un moyen de liaison mécanique, notamment au moins un arbre de transmission mécanique, par exemple une tringle.

Selon un mode de réalisation, le dispositif de stockage d'énergie comprend au moins un brancard supportant la batterie, brancard étant un élément profilé et creux, l'au moins un moyen de liaison s'étendant à l'intérieur dudit brancard.

Selon un mode de réalisation, la batterie comprend un boîtier enveloppant au moins un module électrochimique, le boîtier comprenant au moins une paroi latérale et/ou une plaque inférieure, la paroi latérale et/ou la plaque inférieure étant un élément profilé et creux, l'au moins un moyen de liaison s'étendant à l'intérieur dudit élément profilé et creux.

Selon un mode de réalisation, le dispositif de stockage d'énergie comprend au moins un élément formé par extrusion, notamment par extrusion d'aluminium, l'au moins un moyen de liaison s'étendant dans une chambre intérieure dudit élément formé par extrusion.

Selon un mode de réalisation, l'au moins un moyen de liaison comprend une conduite hydraulique, les parois de la conduite hydraulique formant un ensemble monolithique avec un support supportant la batterie ou avec une paroi d'un boîtier de la batterie.

Selon un mode de réalisation, l'au moins un moyen de liaison s'étend dans un espace libre du dispositif de stockage d'énergie, ledit espace libre étant compris entre au moins un module électrochimique de la batterie et un boîtier de la batterie enveloppant l'au moins un module électrochimique, l'espace libre étant notamment compris entre au moins un module électrochimique de la batterie et un couvercle du boîtier.

Selon un mode de réalisation, le dispositif de stockage d'énergie comprend au moins un moyen de raccordement agencé à un bord du dispositif de stockage d'énergie, l'au moins un moyen de raccordement étant fixé à une extrémité de l'au moins un moyen de liaison pour raccorder l'au moins un moyen de liaison à au moins un moyen de liaison auxiliaire s'étendant à l'extérieur du dispositif de stockage d'énergie.

L'invention se rapporte également à un véhicule, notamment véhicule automobile, comprenant un dispositif de stockage d'énergie tel que défini précédemment.

L'invention se rapporte également à un procédé d'assemblage d'un véhicule, notamment un véhicule automobile, comprenant :
- la fourniture d'un dispositif de stockage d'énergie tel que défini précédemment, et
- la fourniture d'un premier organe et d'un deuxième organe distincts du dispositif de stockage d'énergie, puis
- la liaison du premier organe au deuxième organe par l'intermédiaire de l'au moins un moyen de liaison traversant le dispositif de stockage d'énergie de part en part.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un véhicule automobile selon un mode de réalisation de l'invention.
La figure 2 est une vue en perspective d'un dispositif de stockage d'énergie du véhicule.
La figure 3 est une vue en perspective et selon une coupe transversale d'une partie du dispositif de stockage d'énergie.
La figure 4 est une vue en perspective et selon une coupe transversale d'une partie d'un dispositif de stockage d'énergie selon une première variante de réalisation de l'invention.
La figure 5 est une vue en perspective et selon une coupe transversale d'une partie d'un dispositif de stockage d'énergie selon une deuxième variante de réalisation de l'invention.
La figure 6 une vue en coupe longitudinale d'une partie d'un dispositif de stockage d'énergie selon une troisième variante de réalisation de l'invention.
La figure 7 est une vue schématique d'un moyen de liaison intégré à un dispositif de stockage d'énergie, le moyen de liaison étant équipé d'un moyen de raccordement selon un premier type.
La figure 8 est une vue schématique d'un moyen de liaison intégré à un dispositif de stockage d'énergie, le moyen de liaison étant équipé d'un moyen de raccordement selon un second type.

### Description détaillée

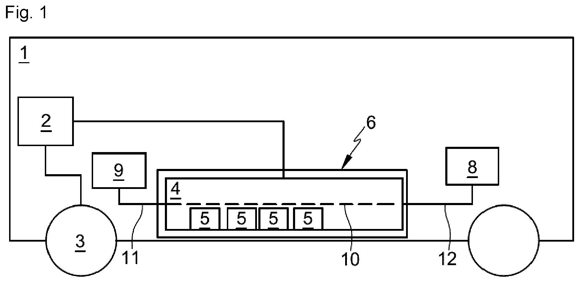

La figure 1 illustre schématiquement un véhicule 1 automobile selon un mode de réalisation de l'invention. Le véhicule 1 peut être par exemple un véhicule particulier, un véhicule utilitaire ou un camion. Le véhicule 1 est un véhicule électrique ou un véhicule hybride, c'est-à-dire qu'il comprend un moteur électrique 2 destiné à entraîner des roues motrices 3 du véhicule. Pour alimenter le moteur électrique 2 en énergie électrique, le véhicule 1 comprend une batterie 4 électrochimique comprenant un ensemble de modules électrochimiques 5, par exemple de type lithium-ion. La batterie 4 est reliée électriquement au moteur électrique 2.

En variante, l'invention peut aussi être adaptée à tout autre type de véhicule comprenant une batterie électrochimique.

La batterie 4 est intégrée à un dispositif de stockage d'énergie 6. Comme cela sera détaillé par la suite, le dispositif de stockage d'énergie 6 comprend non seulement la batterie 4 mais également au moins un support 7 destiné à maintenir la batterie 4 au sein du véhicule 1.

En outre, le véhicule 1 comprend différents systèmes embarqués, chaque système comprenant au moins un premier organe 8 et un deuxième organe 9. Les deux organes 8 et 9 sont distincts l'un de l'autre et reliés l'un à l'autre par un moyen de liaison 10.

En particulier, selon le mode de réalisation présenté, le véhicule 1 comprend un système de freinage. Le premier organe 8 est un organe de friction et le deuxième organe 9 est un organe de commande. L'organe de friction peut être par exemple un étrier de frein destiné à coopérer avec un disque de frein solidaire d'une roue ou un frein à tambour. L'organe de commande peut être par exemple un dispositif d'amplification de la force de freinage ou un dispositif de modulation de la force de freinage tel qu'un dispositif anti blocage des roues ou un dispositif de contrôle de la stabilité du véhicule.

Le premier organe 8 peut se trouver à l'arrière du dispositif de stockage d'énergie 6 et le deuxième organe 9 peut se trouver à l'avant du dispositif de stockage d'énergie 6. Le dispositif de stockage d'énergie 6 est donc agencé entre les deux organes 8 et 9.

Selon le mode de réalisation illustré, le moyen de liaison 10 est un moyen de liaison hydraulique reliant l'organe de friction à l'organe de commande, notamment une conduite hydraulique, à l'intérieur de laquelle se trouve un liquide de freinage. L'effort appliqué par un conducteur sur une pédale de frein du véhicule peut ainsi être transmis de l'organe de commande à l'organe de friction par l'intermédiaire du moyen de liaison 10 hydraulique.

Selon l'invention, et comme cela est illustré schématiquement sur la figure 1, le moyen de liaison 10 traverse le dispositif de stockage d'énergie 6 de part en part. C'est-à-dire que le moyen de liaison 10 est agencé à l'intérieur du dispositif de stockage d'énergie 6, et non au-dessus, en dessous ou sur un côté du dispositif de stockage d'énergie. On utilise ainsi un volume disponible à l'intérieur du dispositif de stockage d'énergie 6 pour loger le moyen de liaison 10.

L'intégration du moyen de liaison 10 ne requiert aucune modification du contour du dispositif de stockage d'énergie, c'est-à-dire de l'enveloppe du dispositif de stockage d'énergie. L'encombrement du dispositif de stockage d'énergie 6 est inchangé par l'intégration du moyen de liaison 10. Ceci permet de gagner de la place à l'extérieur du dispositif de stockage d'énergie pour d'autres moyens de liaison du véhicule et/ou pour augmenter le volume de l'habitacle du véhicule. En outre, le moyen de liaison 10 bénéficie ainsi des moyens de protection utiles pour protéger la batterie 4. Le moyen de liaison 10 est ainsi mieux protégé que s'il était agencé à l'extérieur du dispositif de stockage d'énergie et risque donc moins facilement d'être endommagé.

Comme cela est illustré sur la figure 1, le moyen de liaison peut être prolongé de part et d'autre du dispositif de stockage d'énergie par des moyens de liaison auxiliaires 11, 12 s'étendant à l'extérieur du dispositif de stockage d'énergie. Des moyens de raccordement peuvent être prévus pour relier le moyen de liaison 10 aux moyens de liaison auxiliaires 11, 12.

En variante, le moyen de liaison 10 pourrait être utilisé pour relier n'importe quels autres organes du système de freinage ou même pour relier des organes appartenant à un autre système du véhicule que le système de freinage. Le dispositif de stockage peut comprendre un nombre quelconque de moyens de liaison le traversant.

A titre d'exemple non limitatif, l'invention peut ainsi être utilisée pour relier deux organes distincts appartenant à l'un des systèmes suivants :
- Un système de climatisation et/ou un système de refroidissement comprenant des conduites hydrauliques destinées à transporter un fluide caloporteur et/ou de l'air.
- Un système de motorisation comprenant un moteur à combustion interne (en complément du moteur électrique 2) et un réservoir de carburant relié au moteur à combustion interne par des conduites hydrauliques transportant le carburant. Ce carburant peut être par exemple de l'essence, du gazole, ou du gaz de pétrole liquéfié
- Un système de production d'électricité comprenant une pile à combustible et un réservoir d'hydrogène relié à la pile à combustible.
- Un système d'échappement destiné à évacuer des gaz de combustion dans l'hypothèse où le véhicule serait équipé d'un moteur à combustion interne, et/ou de l'eau dans l'hypothèse où le véhicule serait équipé d'une pile à combustible alimenté en hydrogène. Le système d'échappement peut comprendre une conduite hydraulique destinée à transporter les gaz de combustion ou de l'eau depuis un moteur ou respectivement une pile à combustible à l'avant du véhicule vers un pot d'échappement à l'arrière du véhicule.
- Un système de nettoyage de surfaces extérieures telles que des vitres. Ce système de nettoyage peut comprendre d'une part un réservoir de liquide de nettoyage et une pompe, et d'autre part des gicleurs positionnés à proximité des surfaces à nettoyer.

Dans tous les cas, les deux organes 8, 9 reliés par le moyen de liaison 10 appartiennent à un système différent du système auquel appartient la batterie 4. En particulier, le moyen de liaison 10 traversant le dispositif de stockage d'énergie est bien distinct d'une conduite de refroidissement destinée à refroidir la batterie électrochimique 4. En effet, une telle conduite fait partie du système auquel appartient la batterie 4 puisqu'elle sert à maintenir la batterie 4 à une température de fonctionnement adéquate. Avantageusement, le moyen de liaison 10 n'interagit pas du tout avec le fonctionnement de la batterie 4.

Selon d'autres variantes de réalisation, un moyen de liaison traversant le dispositif de stockage d'énergie 6 pourrait être un moyen de liaison électrique. Le moyen de liaison électrique pourrait ainsi comprendre au moins un câble électrique. Le moyen de liaison pourrait ainsi relier électriquement deux équipements électriques ou électroniques positionnés de part et d'autre du dispositif de stockage d'énergie 6. A titre d'exemple non limitatif, ces deux équipements électriques pourraient être choisis parmi un calculateur, un capteur, un actionneur électrique comme par exemple un petit moteur électrique, un dispositif lumineux, une prise de courant, ou encore un organe de commande.

Selon encore d'autres variantes de réalisation, un moyen de liaison traversant le dispositif de stockage d'énergie pourrait être un moyen de liaison mécanique. Un moyen de liaison mécanique peut par exemple comprendre une tringle. Cette tringle pourrait être mobile à l'intérieur du dispositif de stockage d'énergie 6. Le moyen de liaison mécanique pourrait aussi comprendre un arbre de transmission de faible diamètre. L'arbre de transmission pourrait par exemple être guidé par des roulements supportés par le dispositif de stockage d'énergie 6.

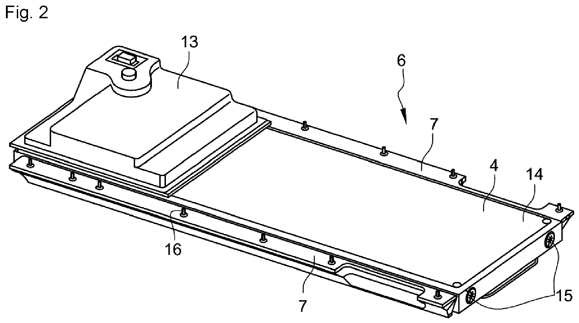

La figure 2 illustre plus en détail le dispositif de stockage d'énergie 6. La batterie 4 comprend une forme globalement parallélépipédique. La batterie 4 s'étend horizontalement au niveau d'un plancher du véhicule. La batterie peut s'étendre en longueur sensiblement entre un essieu avant et un essieu arrière du véhicule. La batterie peut s'étendre sur toute la largeur du véhicule largeur, ou tout au moins sur au moins 50% de la largeur du véhicule. Selon un mode de réalisation, la batterie 4 peut comprendre une surface supérieure entièrement plane, destinée à s'étendre horizontalement lorsque le véhicule repose sur un sol horizontal.

Comme cela est bien visible sur la figure 2, un couvercle de la batterie peut également comprendre une surélévation 13 locale. Cette surélévation 13 peut accueillir des modules électrochimiques 5 supplémentaires. La batterie 4 peut ainsi comprendre des modules électrochimiques 5 répartis sur deux étages.

La batterie 4 comprend en outre un boîtier 14 contenant les modules électrochimiques 5. Le boîtier 14 forme une enceinte étanche à l'eau et aux projections qui protège les modules électrochimiques 5. Le boîtier 14 peut être équipé de soupapes 15 destinées à permettre une évacuation de gaz contenus à l'intérieur de la batterie pour éviter une surpression. Selon le mode de réalisation illustré, la batterie est équipée de deux soupapes 15 s'étendant sur une face arrière de la batterie.

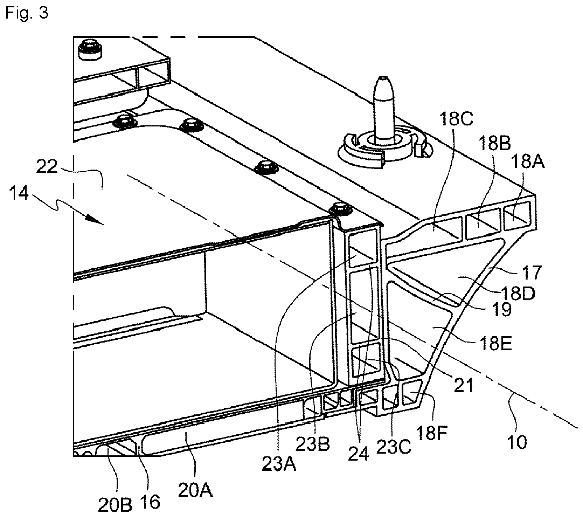

Comme évoqué précédemment, la batterie 4 est maintenue par au moins un support 7. Le support 7 est un élément structurel formant une interface entre la batterie 4 et une caisse du véhicule. Comme illustré sur les figures 2 et 3, le support 7 comprend deux brancards 17 latéraux. Chaque brancard 17 s'étend ainsi entre l'avant et l'arrière du véhicule, le long d'un côté latéral de la batterie 4. Chaque brancard 17 peut être destiné à être fixé à un longeron du véhicule par l'intermédiaire de moyens de fixation tels que des vis de fixation.

Chaque brancard 17 est un élément profilé. Chaque brancard 17 s'étend suivant l'axe longitudinal du véhicule, c'est-à-dire l'axe selon lequel le véhicule 1 progresse en ligne droite. Par conséquent, Chaque brancard 17 comprend une section perpendiculaire à l'axe dans lequel il s'étend qui est sensiblement constante. De préférence, chaque brancard 17 est fabriqué par un procédé d'extrusion de matière. De préférence, chaque brancard 17 est constitué d'aluminium. Le support 7 offre ainsi un compromis idéal entre rigidité et légèreté. Chaque brancard 17 peut être un élément monolithique, c'est-à-dire formé par une seule et même pièce.

En outre, chaque brancard 17 est creux. Chaque brancard 17 comprend ainsi au moins une chambre intérieure fermée par des cloisons latérales et débouchant à l'avant et à l'arrière par des ouvertures. La présence de chambres intérieures permet d'alléger significativement chaque brancard 17, et fournit en outre un volume libre pour le passage d'au moins un moyen de liaison 10.

La section de chaque brancard 17 présente une forme globalement triangulaire avec un côté vertical s'étendant le long du boîtier 14, un côté horizontal s'étendant à hauteur d'un couvercle de la batterie 4, et un côté oblique. Chaque brancard 17 comprend une pluralité de chambres intérieures 18A, 18B, 18C, 18D, 18E et 18F s'étendant parallèlement à l'axe longitudinal du véhicule, et séparées les unes des autres par des cloisons internes 19. La section de chaque chambre intérieure peut avoir des dimensions et des formes variées. Les cloisons internes 19 forment des nervures qui rigidifient les brancards 17.

Chacune de chambres intérieures 18A, 18B, 18C, 18D, 18E et 18F, ou une partie de ces chambres, peut recevoir au moins un moyen de liaison, notamment un moyen de liaison hydraulique tel qu'une conduite, un moyen de liaison électrique tel qu'un câble, ou encore un moyen de liaison mécanique tel qu'une tringle ou un arbre. Dans l'hypothèse où le moyen de liaison est une conduite, celle-ci peut être un élément rapporté, inséré dans une chambre intérieure via l'une de ses deux extrémités. A titre d'exemple, on a représenté sur la figure 3 un moyen de liaison 10 traversant la chambre intérieure 18E.

En variante, une telle conduite peut aussi être formée directement par des cloisons latérales délimitant une chambre intérieure. Dans cette hypothèse, le fluide transporté par une telle conduite hydraulique viendrait directement en contact avec les cloisons délimitant la chambre intérieure. Avantageusement, l'aluminium est compatible avec la plupart des fluides utilisés dans un véhicule automobile, et notamment avec un liquide de freinage. La circulation d'un liquide de freinage au contact d'un brancard 17 ne pose donc aucun problème.

Le boîtier 14 comprend une plaque inférieure 16, des parois latérales 21 et un couvercle 22 vissé sur une face supérieure des parois latérales 21.

La plaque inférieure 16 s'étend sensiblement horizontalement sous les modules électrochimiques 5. Elle comprend une rigidité suffisante pour supporter le poids des éléments électrochimiques, notamment sans se déformer excessivement. La plaque inférieure 16 est également un élément profilé suivant l'axe longitudinal du véhicule, et creux. Elle peut également être fabriquée par un procédé d'extrusion de matière. De préférence, la plaque inférieure 16 est un élément monolithique constitué d'aluminium. Elle comprend également une pluralité de chambres intérieures 20A, 20B, 20C à l'intérieur desquelles peuvent être agencés des moyens de liaison.

Chaque paroi latérale 21 s'étend longitudinalement le long d'un côté latéral de la batterie 4. Chaque paroi latérale 21 est également un élément profilé suivant l'axe longitudinal du véhicule, et creux. Chaque paroi latérale 21 peut également être fabriquée par un procédé d'extrusion de matière. De préférence, chaque paroi latérale 21 est un élément monolithique constitué d'aluminium. Chaque paroi latérale 21 comprend également une pluralité de chambres intérieures 23A, 23B, 23C, notamment de section rectangulaire et agencées verticalement l'une au-dessus de l'autre. Des moyens de liaison peuvent également être agencés au travers des chambres intérieures 23A, 23B, 23C.

En variante, les parois latérales 21 et/ou la plaque inférieure 16 du boîtier 14 et/ou les brancards 17 pourraient présenter des formes différentes et/ou comprendre un nombre de chambres intérieures différent.

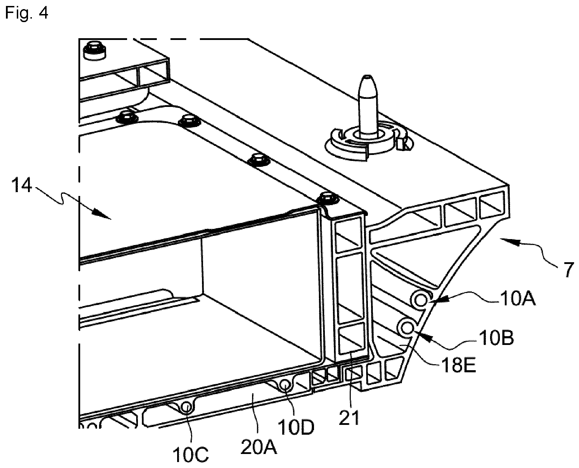

La figure 4 illustre une première variante de réalisation de l'invention dans laquelle des conduites hydrauliques forment un ensemble monolithique avec le brancard 17. Selon cette variante de réalisation, deux conduites hydrauliques 10A, 10B sont agencées à l'intérieur de la chambre intérieure 18E et sont en contact avec une cloison latérale délimitant cette chambre.

De même, deux autres conduites hydrauliques 10C, 10D forment un ensemble monolithique avec la plaque inférieure 16. Les conduites hydrauliques 10C, 10D sont agencées à l'intérieur de la chambre intérieure 20A.

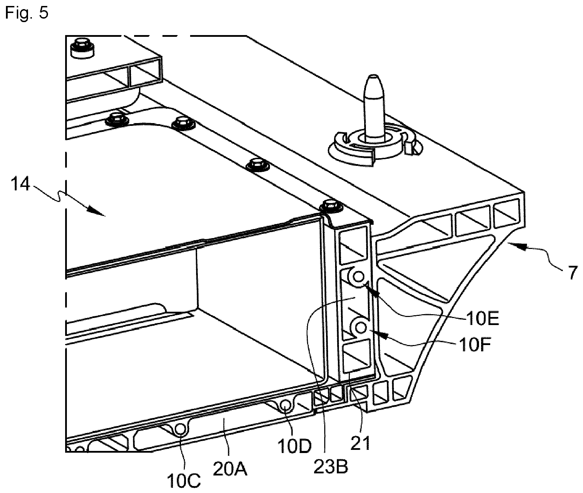

La figure 5 illustre une deuxième variante de réalisation de l'invention dans laquelle des conduites hydrauliques forment un ensemble monolithique avec la paroi latérale 21 du boîtier 14. Selon cette variante de réalisation, deux conduites hydrauliques 10E, 10F sont agencées à l'intérieur de la chambre intérieure 23B.

Les conduites hydrauliques 10A, 10B sont réalisées par extrusion lors de la fabrication du brancard 17. Les conduites hydrauliques 10C, 10D sont réalisées par extrusion lors de la fabrication de la plaque inférieure 16. Les conduites hydrauliques 10E, 10F sont réalisées par extrusion lors de la fabrication de la paroi latérale 21. Chacune des conduites hydrauliques 10A, 10B, 10C, 10D, 10E et 10F peut comprendre une forme globalement cylindrique. Comme cela est visible sur la figure 5, des conduites hydrauliques peuvent être positionnées au niveau d'un coin d'une chambre intérieure de manière à limiter la quantité de matière nécessaire pour former ladite conduite hydraulique.

En remarque, la première variante et la deuxième variante peuvent être combinées de manière à proposer un dispositif de stockage d'énergie pourvu de six conduites hydrauliques. Par symétrie, un côté gauche du dispositif de stockage d'énergie (non représenté) peut également être équipé de telles conduites hydrauliques. En variante tout nombre de conduites hydrauliques pourrait être envisagé. Ces conduites hydrauliques pourraient aussi être intégrées à d'autres chambres intérieures que celles qui sont représentées sur les figures 4 et 5. Avantageusement, ces conduites hydrauliques sont globalement rectilignes, ce qui permet d'éviter toute perte de charge du fluide qu'elles transportent.

Les modes de réalisation des figures 4 et 5 sont particulièrement adaptés pour véhiculer un liquide sous haute pression comme c'est le cas par exemple dans un système de freinage. En effet, les cloisons délimitant chaque conduite hydraulique sont relativement épaisses ce qui évite une déformation de la conduite lorsque le fluide qu'elle transporte est sous pression. L'épaisseur de ces cloisons est aussi mise à profit pour augmenter la rigidité des parois latérales 21, et/ou de la plaque inférieure 16, et/ou des brancards 17.

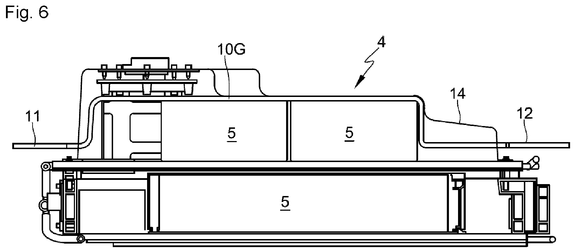

La figure 6 illustre une variante de réalisation de l'invention dans laquelle un moyen de liaison 10G traverse le boîtier 14 de la batterie 4. Le moyen de liaison 10G s'étend dans un espace libre compris entre au moins un module électrochimique 5 de la batterie et le boîtier 14 de la batterie. Ledit espace libre peut notamment être situé sous le couvercle 22 du boîtier. Le moyen de liaison 10G peut alors comprendre un ensemble de coudes, par exemple des coudes à angle droit, de manière à se frayer un chemin au sein de la batterie 4 sans entrer en contact avec des modules électrochimiques 5, ni avec des conducteurs électriques. Des moyens d'isolation électriques peuvent éventuellement être ajoutés pour éviter tout risque de court-circuit entre le moyen de liaison 10G et des conducteurs électriques. Comme cela est illustré sur la figure 6, le moyen de liaison 10G peut traverser uniquement la surélévation 13. En variante, le moyen de liaison pourrait traverser l'ensemble de la batterie 4 depuis son bord avant jusqu'à son bord arrière.

Chaque moyen de liaison 10 peut en outre être équipé de moyens de raccordement pour raccorder le moyen de liaison 10 à un moyen de liaison auxiliaire 11 ou 12. En particulier, deux moyens de raccordement peuvent être agencés à chacune des deux extrémités du moyen de liaison 10.

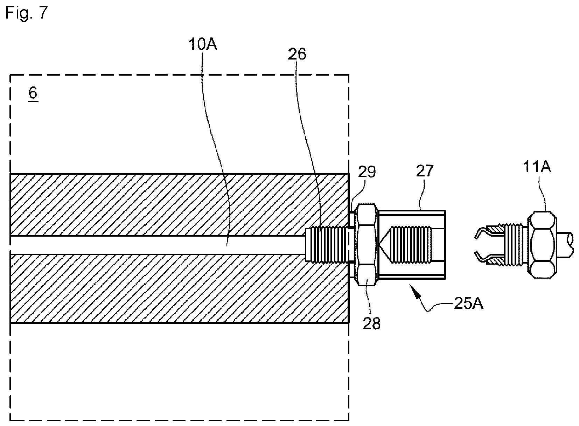

La figure 7 illustre un moyen de raccordement 25A selon un premier mode de réalisation. Le moyen de raccordement 25A est particulièrement adapté pour raccorder l'une des conduites hydrauliques 10A, 10B, 10C, 10D, 10E, 10F à un moyen de liaison auxiliaire. Le moyen de raccordement 25A comprend une première portion 26 pourvu d'un axe fileté destiné à être vissé à une extrémité de la conduite hydraulique 10A. A cet effet la conduite hydraulique 10A comprend une extrémité taraudée. Le moyen de raccordement 25A comprend une deuxième portion 27, s'étendant à l'extérieur du dispositif de stockage d'énergie 6, destinée à être vissée à une extrémité d'une conduite hydraulique auxiliaire 11A. A cet effet, la deuxième portion 27 comprend un trou taraudé destiné à coopérer avec un axe fileté à une extrémité de la conduite hydraulique auxiliaire 11A. Entre la première portion 26 et la deuxième portion 27, le moyen de raccordement 25A comprend un élément de serrage 28 tel qu'un écrou permettant de visser le moyen de raccordement 25A dans l'extrémité de la conduite hydraulique 10A. En complément, le moyen de raccordement 25A comprend aussi un moyen d'étanchéité 29 destiné à compressé entre une face du dispositif de stockage d'énergie 6 et l'élément de serrage 28, pour parfaire l'étanchéité du raccordement hydraulique.

Un tel moyen de raccordement est particulièrement adapté pour relier des conduites hydrauliques d'un système de freinage. En effet, un tel moyen de raccordement est apte à supporter les pressions importantes mises en oeuvre dans un tel système. En variante, dans l'hypothèse où les conduites hydrauliques seraient destinées à contenir un fluide sous plus faible pression, des moyens de raccordement plus simples pourraient être envisagés. D'une manière générale, le moyen de raccordement peut être adapté en fonction du type de fluide destiné à circuler dans la conduite hydraulique correspondante.

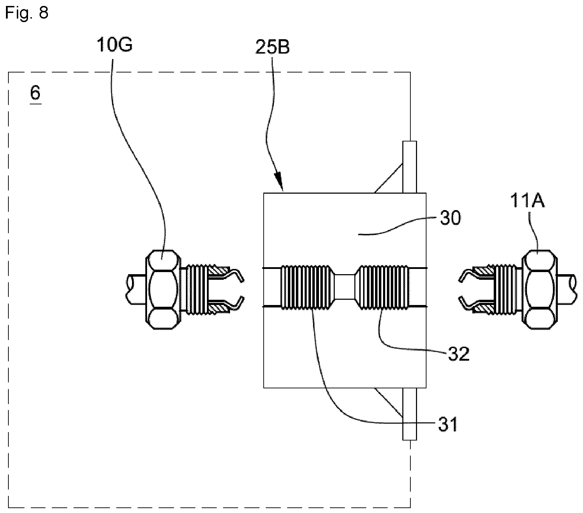

La figure 8 illustre un moyen de raccordement 25 B selon un deuxième mode de réalisation. Le moyen de raccordement 25B est particulièrement adapté pour raccorder une conduite hydraulique distincte du boîtier 14, de la plaque inférieure 16 ou d'un brancard 17. Le moyen de raccordement 25B est particulièrement adapté pour raccorder une conduite hydraulique 10G traversant la batterie 4 telle que représentée sur la figure 6. Le moyen de raccordement 25B comprend une embase 30 par l'intermédiaire de laquelle il est fixé solidairement au boîtier 14 de la batterie, par exemple par soudure. L'embase 30 est pourvu d'un premier trou taraudé 31 et d'un deuxième trou taraudé 32. Les deux trous taraudés 31 et 32 sont agencés dans le prolongement l'un de l'autre et communiquent hydrauliquement ensemble. Le premier trou taraudé 31 est destiné à coopérer avec une extrémité filetée de la conduite hydraulique 10G, laquelle s'étend à l'intérieur du dispositif de stockage d'énergie 6. Le deuxième trou taraudé 32 est destiné à coopérer avec une extrémité filetée d'une conduite hydraulique auxiliaire 11A s'étendant à l'extérieur du dispositif de stockage d'énergie 6.

Pour assembler le véhicule, on peut procéder de la manière suivante :
Tout d'abord, on fournit le dispositif de stockage d'énergie 6, le premier organe 8 et le deuxième organe 9. Ensuite, on relie le premier organe au deuxième organe par l'intermédiaire de l'au moins un moyen de liaison 10 traversant le dispositif de stockage d'énergie de part en part. A cet effet, des éléments de liaison auxiliaires sont reliés d'une part respectivement au premier organe 8 et au deuxième organe 9, et d'autre part à une extrémité du moyen de liaison 10 à l'aide des moyens de raccordement 25A ou 25B.

Finalement, grâce à l'invention, au moins une partie des moyens de liaisons reliant deux organes du véhicule sont intégrés au dispositif de stockage d'énergie 6, ce qui permet de libérer de la place pour d'autres besoins tout en conférant une protection supplémentaire à ces moyens de liaison. L'invention permet ainsi de proposer des véhicules automobiles faciles à assembler et/ou plus spacieux.

## Revendications

1. Dispositif de stockage d'énergie (6) pour un véhicule (1), notamment pour un véhicule automobile, le dispositif de stockage d'énergie comprenant une batterie (4) électrochimique et au moins un moyen de liaison (10) destiné à relier deux organes (8, 9) du véhicule distincts du dispositif de stockage d'énergie, l'au moins un moyen de liaison traversant le dispositif de stockage d'énergie de part en part.

2. Dispositif de stockage d'énergie (6) selon la revendication précédente, **caractérisé en ce que** l'au moins un moyen de liaison (10) comprend :
- au moins un moyen de liaison hydraulique, notamment au moins une conduite hydraulique d'un système de freinage du véhicule, et/ou
- au moins un moyen de liaison électrique, notamment au moins un câble électrique, et/ou
- au moins un moyen de liaison mécanique, notamment au moins un arbre de transmission mécanique, par exemple une tringle.

3. Dispositif de stockage d'énergie (6) selon l'une des revendications précédentes, **caractérisé en ce qu'**il comprend au moins un brancard (17) supportant la batterie (4), brancard étant un élément profilé et creux, l'au moins un moyen de liaison (10) s'étendant à l'intérieur dudit brancard.

4. Dispositif de stockage d'énergie (6) selon l'une des revendications précédentes, **caractérisé en ce que** la batterie (4) comprend un boîtier (14) enveloppant au moins un module électrochimique (5), le boîtier comprenant au moins une paroi latérale (21) et/ou une plaque inférieure (16), la paroi latérale et/ou la plaque inférieure étant un élément profilé et creux, l'au moins un moyen de liaison (10) s'étendant à l'intérieur dudit élément profilé et creux.

5. Dispositif de stockage d'énergie (6) selon l'une des revendications précédentes, **caractérisé en ce qu'**il comprend au moins un élément (7, 21) formé par extrusion, notamment par extrusion d'aluminium, l'au moins un moyen de liaison (10) s'étendant dans une chambre intérieure (18A, 18B, 18C, 18D, 18E, 18F, 20A, 20B, 23A, 23B, 23C) dudit élément formé par extrusion.

6. Dispositif de stockage d'énergie selon l'une des revendications précédente, **caractérisé en ce que** l'au moins un moyen de liaison (10) comprend une conduite hydraulique, les parois de la conduite hydraulique formant un ensemble monolithique avec un support (7) supportant la batterie (4) ou avec une paroi (21) d'un boîtier (14) de la batterie (4).

7. Dispositif de stockage d'énergie (6) selon l'une des revendications précédentes, **caractérisé en ce que** l'au moins un moyen de liaison (10) s'étend dans un espace libre du dispositif de stockage d'énergie, ledit espace libre étant compris entre au moins un module électrochimique (5) de la batterie et un boîtier (14) de la batterie enveloppant l'au moins un module électrochimique, l'espace libre étant notamment compris entre au moins un module électrochimique (5) de la batterie et un couvercle (22) du boîtier.

8. Dispositif de stockage d'énergie (6) selon l'une des revendications précédentes, **caractérisé en ce qu'**il comprend au moins un moyen de raccordement (25A, 25B) agencé à un bord du dispositif de stockage d'énergie, l'au moins un moyen de raccordement étant fixé à une extrémité de l'au moins un moyen de liaison (10) pour raccorder l'au moins un moyen de liaison à au moins un moyen de liaison auxiliaire (11, 12) s'étendant à l'extérieur du dispositif de stockage d'énergie.

9. Véhicule (1), notamment véhicule automobile, comprenant un dispositif de stockage d'énergie (6) selon l'une des revendications précédentes.

10. Procédé d'assemblage d'un véhicule (1), notamment un véhicule automobile, comprenant :
- la fourniture d'un dispositif de stockage d'énergie (6) selon l'une des revendications 1 à 8, et
- la fourniture d'un premier organe (8) et d'un deuxième organe (9) distincts du dispositif de stockage d'énergie, puis
- la liaison du premier organe au deuxième organe par l'intermédiaire de l'au moins un moyen de liaison (10) traversant le dispositif de stockage d'énergie de part en part.
